# EUROPEAN PATENT APPLICATION

(11) **EP 2 028 813 A1**
(43) Date of publication of application: **25.02.2009**
(21) Application number: 07252669.2
(22) Date of filing: 02.07.2007
(51) Int. Cl.: H04L 29/06, H04L 12/58, G06F 17/30

(54) **Method of synchronizing intermittently connected mobile terminals**

(71) Applicant: British Telecommunications public limited company, 81 Newgate Street London EC1A 7AJ (GB)
(72) Inventor: The designation of the inventor has not yet been filed
(74) Representative: Lidbetter, Timothy Guy Edwin

(57) **Abstract**

For each of a number of users (11,12,13), a network-based server (14) maintains a respective data set (141,142,143) of each data file currently stored on the user device, such as scheduling details, electronic mail, documents, etc. Each data set comprises a master copy (161) indicative of the latest data intended for that user (11). When a user, either the user associated with the user device, or some other user (151,152,153) authorised to do so makes a change to the user data, for example rescheduling a meeting, the master copy (161) is updated. The server (14) also identifies how this data differs from that held on a second copy (171), which duplicates what is currently stored on the terminal, and generates a third dataset (181) identifying the changes that would need to be made to change the duplicate copy (171) to correspond to the master copy (161). This change data is forwarded to the user terminal when it next makes contact with the network. The server (14) selects a format from a set (149) of available formats in which the updating information in the buffer (181) should be sent to the device (11), the selection being such as to ensure the optimum delivery of information given the transport medium (111) and terminal type (11) available. The change data to be transmitted may be prioritised according to user preferences and data capacity, and may have local context content added. The master copy (161) is updated so that it continues to reflect the data actually stored on the device (11).

## Description

This invention relates to data communications systems and in particular to a system supporting access to data systems by users of mobile terminals.

Many people use mobile communications devices such as laptop computers, personal digital assistants (PDAs) or mobile telephones to access information necessary for their business and personal lives whilst they are on the move.

The world is not a seamlessly connected environment and different modes of access are available to users depending on the location of the user and the capabilities of the user's device. Such modes include broadband internet access, wireless access using the IEEE802.11 standard popularly known as WiFi, the "ad hoc" piconet system marketed as Bluetooth, or more basic packet data systems such as the GPRS (General Packet Radio Service) and text messaging (SMS) services available under the GSM cellular communications standard. Users will consequently connect to different networks allowing different application performance. The volume and format of data that it is appropriate to access will vary according to the user's network context.

For a mobile user with intermittent or variable access to a data resource, it is necessary to ensure that the data available on the user's device is maintained in synchrony with the data resource. A local copy of the data in the resource may be maintained on the user device for use when it is "off-line", which is over-written by the current version on the data resource every time the device goes on-line (contact is made with the data resource). Such a process is known for example from the process used when a PDA docks with a master computer, but in that case the connection is dedicated and the data transfer is over a fixed high capacity link. It would be cumbersome, and extremely slow, to use the same process on wireless data networks.

The present invention provides a system that allows an individual to connect to various different transport media and to synchronise the data stored on his mobile device with that stored in the database in an efficient manner and in a form suitable for the connection method.

According to the present invention, there is provided a method for updating data maintained on a terminal to incorporate data that is generated whilst the terminal is out of communication with the source of the generated data, comprising maintaining a master record of the generated data in a network-based server, generating a record of the changes that are required to bring the data stored on the terminal into conformity with the master record of the generated data, detecting when the terminal makes contact with the server, and transmitting the recorded changes to the terminal.

According to another aspect of the invention, there is provided a data network having a server configured to receive data generated for access by one or more predetermined user terminals, whilst the terminals are out of communication with the source of the generated data, the server comprising master record storage means for maintaining a master record of the generated data, change recording means for generating, from the data received by the server, a record of changes that are required to bring the data currently stored on the terminal into conformity with the master record of the generated data, data storage means for storing the record of changes, detection means for detecting when the terminal makes contact with the server, and transmission means for transmitting the recorded changes from the store to the terminal.

In a preferred arrangement, the server maintains a duplicate record of the data currently stored on the terminal, and generates the change data by comparison between the master record and the duplicate record.

In a preferred arrangement, the server has the capability to configure the change data into a plurality of formats, and the server determines, when the terminal makes contact with the network, the transport medium by which the terminal is currently connected and delivers the updating information to the terminal in a format appropriate to the transport medium. In a preferred arrangement, the invention also adapts the data transfer to the type of user device through which connection is being made.

Because the server is configured for the purpose of updating, it can record the changes made to the database since the last download, and transfer only the data needed to effect those changes. This vastly reduces the volume of data to be transferred, since most data in the database will remain unchanged since the previous contact.

Data may be prioritised so that, for example, updates to diary appointments in an office organiser programme such as Microsoft Outlook® are downloaded in a sequence with the most imminent appointment times that are to be changed transferred first. Other time-sensitive material such as travel arrangements or meeting notes, may also be prioritised. This would require that the relevant time can be identified from the material, but as times (particularly dates) appear in only a few standard formats, it would be relatively straightforward to programme the system to identify dates in message headers or the like. Priorities can then be allocated according to the imminence of the dates so identified - whether in the original or revised data, as it can be as important to know of a cancelled or postponed appointment as of a new appointment or one which has been brought forward. Such prioritisation ensures that in the event of a slow or unreliable data connection the data of most immediate importance is the most likely to be downloaded.

Embodiments of the invention will now be described by way of example, with reference to the drawings, in which
Figure 1 is a schematic diagram illustrating the elements which co-operate to form a first embodiment of the invention
Figure 2 is a schematic diagram illustrating the elements which co-operate to form a first embodiment of the invention
Figure 3 is a flow diagram illustrating a number of exemplary scenarios in the implementation of the invention

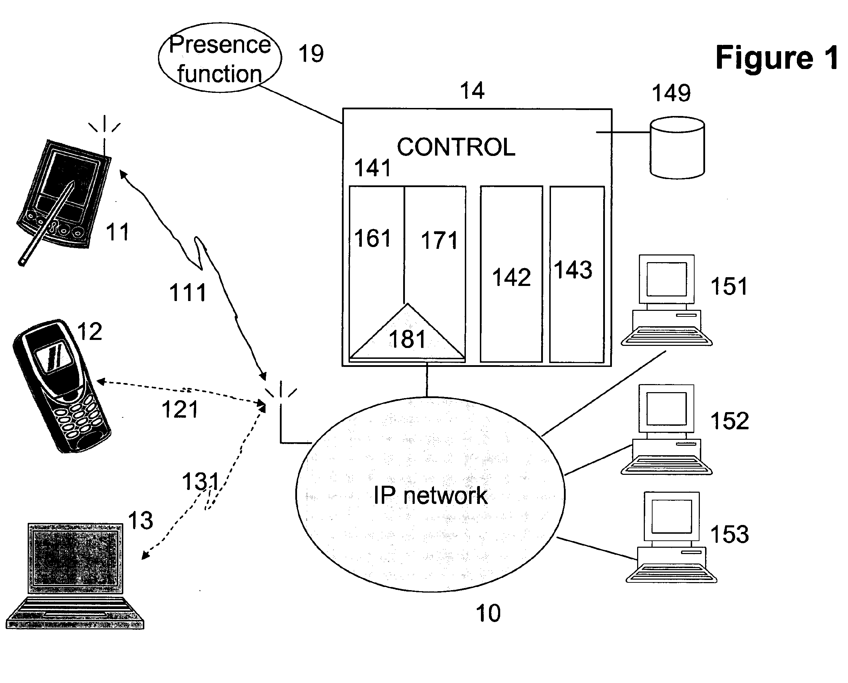

Figure 1 shows a server 14 configured according to the invention embedded in a a distributed business communications system 10 that provides direct dialling capability and advanced calling features similar to an onsite PBX: an arrangement known as a Centrex. Three user devices 11, 12, 13 are depicted. For illustrative purposes the user devices are connected to the IP network 10 by different modes: respectively wireless broadband 111, cellular data network 121, GPRS packet switching mode 131. Other modes, for example a fixed link through a modem, may also be available.

For each user 11, 12, 13, the server 14 maintains a respective data set 141, 142, 143 of each data file currently stored on the user device, such as scheduling details, electronic mail, documents, etc. As shown only for data set 141, each data set comprises a master copy 161 indicative of the latest data intended for that user 11, a duplicate copy 171 indicative of the data actually held on the terminal 11, and a "delta" file 181 indicative of the differences between the master copy 161 and the duplicate copy 171. When a user (either the user associated with the user device, or some other user 151, 152, 153 authorised to do so) makes a change to the user data, for example rescheduling a meeting, the master copy 161 is updated. The server 14 also identifies how this data differs from that previously held on the master copy, and generates a corresponding "delta" dataset 181 identifying the changes that need to be made to change the duplicate copy 171 to correspond to the master copy 161. This delta dataset 181 is maintained as a data buffer, to be forwarded to the user terminal when the opportunity arises.

Further updates may add or modify the data already in the buffer.

In operation, when a device 11 is detected by the network 10, it is first registered with the network. During the initial handshake process the device is interrogated by the network 10 to determine the device type, the bandwidth/data rate available over the connection 111, and other relevant information about the device such as the size and resolution of the screen, any audio capability, memory size, and other factors. The server combines this data with information from a network presence function 19, identifying the network location of the device 11, to allow the currently-available performance of the device 11 and the type of connection 111 to be assessed.

Based on this information, the server 14 next selects a format from a set 149 of available formats in which the updating information in the buffer 181 should be sent to the device 11. This selection is made to ensure the best delivery of information over the transport medium 111 available; speed, the capabilities of the user terminal currently in use, parameters such as cost may also be applied.

The server 14 next identifies what delta data is currently in the buffer 181. The information could be newly-received electronic mail, changes to scheduled meeting times, or confirmation information such as ticket reservation numbers. Other data that may be updated, prioritised according to user preferences and data capacity, may include traffic and public transport reports, share prices, sports results. The information can also have local context content added, including location-dependant attributes such as local time. The delta data 181 is then formatted according to the selected configuration and downloaded through the network 10 to the device 11, with the highest priority data being transmitted first. The master copy 141 is updated so that it continues to reflect the data actually stored on the device 11.

Whilst the download is taking place, further updates may take place at the instigation of a user 151, resulting in additional delta data being added to the buffer 181. This additional data is also downloaded from the buffer according to the priority it is accorded. Such updates may include cancellation of an existing update - if the update to be cancelled is still in the buffer it may be deleted from there: neither it nor its cancellation need be forwarded to the device.

Changes directly input to the device 11 by the user are transmitted over the IP network 10 to update the master copy 161 in the server 14, either at the time they are made or, if the device is not connected to the network 10 at that time, when it is next so connected.

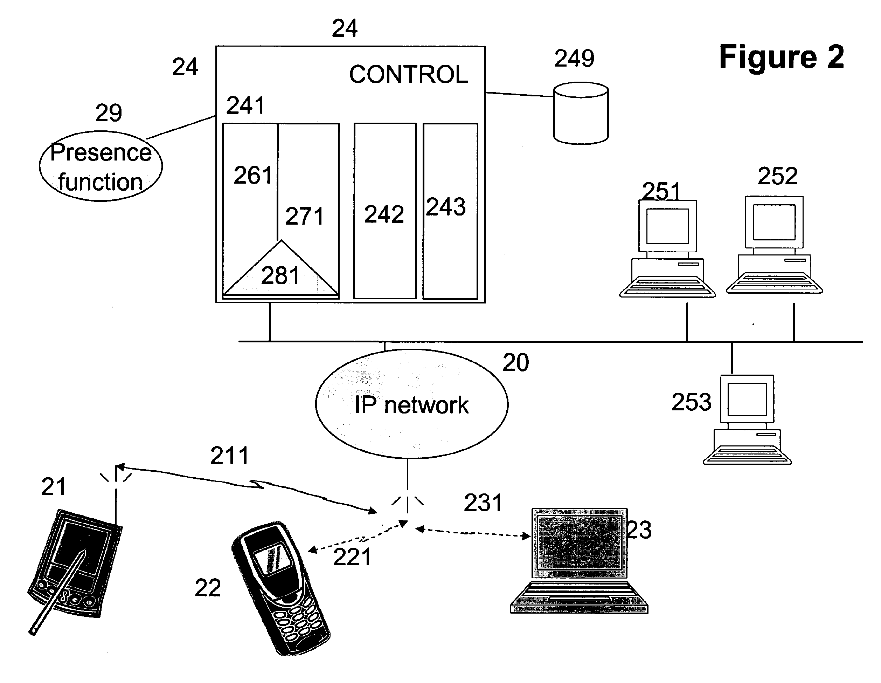

Figure 2 shows an alternative architecture. Elements of this architecture equivalent to those in Figure 1 are indicated by the equivalent reference numerals, with the initial "1" replaced by a "2". This architecture includes a server 24 configured according to the invention embedded in a local area network (LAN) 28 in an enterprise or large/medium business deployment. Individual users 21, 22, 23, 251, 252, 253 have access to the server either through the LAN 28, or by remote access through an IP network 20. The operation of this embodiment is similar to that of the first embodiment, except for the differences imposed by the different network architecture.

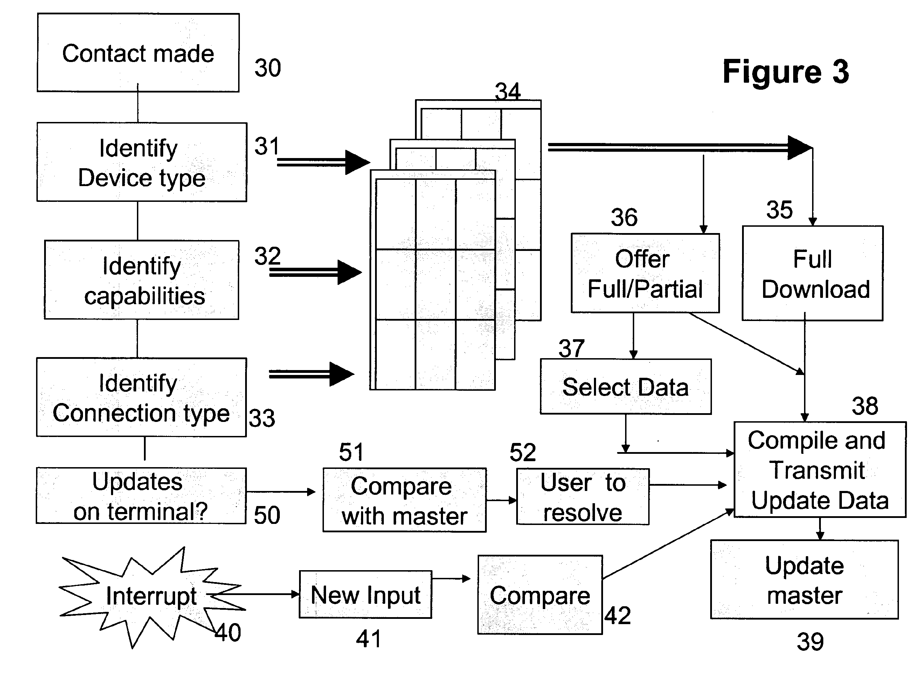

The processes performed by the server 14 will now be discussed with reference to Figure 3. It will be understood that the processes performed by the server 24 of the alternative embodiment of Figure 2 are similar.

A copy of the data that is stored on a user device 11 is maintained in a store 141 dedicated to he individual user. Two versions 161, 171 are maintained. When the user device is in communication with he server these versions are usually identical. During a period when a user 11 is not in contact with the network, the master version 161 is updated as amendments to the data are made. The duplicate version 171 remains unchanged.

When the user device 11 next establishes contact 30 with the server 14 after a period of non-contact, for example because it was out of range or switched off, the server 14 seeks to determine various characteristics of the device 11 and its connection 111 to the server. The type of device (e.g PDA 11, mobile phone 12, laptop 13 is determined (31) in order to identify the screen size and other characteristics, which will determine how information may best be displayed. The device is also.interrogated to determine what applications it is running (step 32). The connection type 111, 121, 131 (broadband, basic cellular, GPRS, etc) is also analysed (33) to determine the speed at which data may be transferred to the device.

The results of this analysis are analysed by the server 14, which uses a look-up table 34 to determine the process to be adopted. Instructions to perform the appropriate process are then extracted from a programme store 149.

A number of possible paths are depicted in Figure 3. For example, the server 14 may determine that there is sufficient bandwidth on the connection 111, and sufficient capability in the terminal 11, for a full download 35 of the updating data to be effected in a very short time. If this is not the case, the server 14 may present the user with an offer 36 of the option of a partial download. This allows the user to decide whether he wishes the device 12 and connection 121 to be occupied with his activity for the length of time necessary for the full update: this will be particularly significant if use of the connection 121 is charged on a time-based tariff.

If the user selects a partial download, the server selects the data that is to be downloaded from the buffer 181 - typically that which is most time-critical, or according to criteria previously established by the user.

The data to be transmitted is then extracted from the buffer 181 dedicated to the user 11 and translated (step 38) into a format suitable for the terminal 11 to which it is to be transmitted, and the connection 111 over which it is to be transmitted. After successful transmission (which may be confirmed by an acknowledgement returned by the terminal), the buffer record 181 and the duplicate record 171 are updated (39). If this was a full update, the master and duplicate records 161, 171 will now be identical, and the delta record 181 will be empty.

In the event that the data update is being made over a slow connection 111, there is the possibility that the user 11 or some other party 151 may amend the record 161 whilst a download is in progress. In the event of such an interruption 40, the new input 41 is compared with the data in the master store 161, and the data in the buffer 181 modified accordingly before transmission resumes. This interrupt mode prevents the repeated transmission of different versions of updates for the same data and therefore reduces the amount of data that is transferred.

If updates have been made to he data stored on the terminal 11 whilst it has been out of contact with the server 14, these may conflict with data added to the master copy during that period. Any such updates 50 are first compared with the data in the corresponding master file 161 (step 51). In the event of a conflict, such as both the user 11 of the device and some other party 151 having attempted an update of the same data item, the presence of update data in the buffer 181 will cause an alert to be sent to the user 11, giving the user the opportunity to select which version or versions is to be saved (step 52). This is used to modify the update data 38 to be transmitted to the user device 11, either by omitting elements of the delta record 181 that have been negated or superseded by changes made to the record of the user device, or by overwriting such changes in the user device 11 if the master record 161 is to be adopted. The master copy 161 is then updated accordingly and, if required, the amended version from the buffer 181 transmitted to the user terminal 11.

Should the connection 111 be lost before all the delta data has been downloaded, or if some of the data is incompatible with the device 11 or connection type 111 currently in use, the delta data remains in the buffer 181 until a further connection is made or until it is overwritten by further updating data.

Examples of different download modes appropriate for different situations will now be discussed. In the first example, the user has a PDA phone 11 running standard applications, connected via a wireless broadband connection 111. The server 14 detects that the device 11 has a Native/direct ip capability and is running typical mobile applications such as Windows Outlook ®, and responds by performing a full synchronisation download, with relevant and available changes passed to all of the available applications on the phone.

In the second example, the user has a mobile phone 12 with basic text capabilities and no additional applications, and is connecting over an international roaming connection 121. In this case the server 14 determines that a flat text file of only the basic information changes available is the most appropriate, because of the limited capabilities of the handset and the limited, and costly, bandwidth available on the international connection 121.

In the third example, the user has an advanced capability laptop PC 13 and connects over a GPRS connection 132. In this case, the server detects that the full range of applications is available on the terminal, but to do a full synchronisation would take significant time because of the slow speed of the GPRS connection 132. The server 14 prompts the user to decide whether to take a full or partial update of information (step 36). If the user requests a partial update a pre-configured set of changes 37 are passed to the user, but if the full update is requested a full synchronisation is performed.

The server may also determine the location of the user and prompt the user to indicate whether he requires location-based information. If such a request is then made, the appropriate information on the locality is transmitted to the user by the most appropriate means according to the network performance data.

## Claims

1. A method for updating data maintained on a terminal to incorporate data that is generated whilst the terminal is out of communication with the source of the generated data, comprising maintaining a master record of the generated data in a network-based server, generating a record of data that has been changed in the master record for which corresponding changes are required to the data stored on the terminal into conformity with the master record of the generated data, detecting when the terminal makes contact with the server, and transmitting the recorded changes to the terminal.

2. A method according to claim 1, in which the server maintains a duplicate record of the data currently stored on the terminal, and generates the change data by comparison between the master record and the duplicate record.

3. A method according to claim 1 or claim 2, wherein the server has the capability to configure the change data into a plurality of formats, and the server determines, when the terminal makes contact with the network, the transport medium by which the terminal is currently connected and delivers the updating information to the terminal in a format appropriate to the transport medium.

4. A method according to claim 3, wherein the server adapts the data transfer to the type of user device through which connection is being made.

5. A method according to any preceding claim, wherein the server identifies the changes made to the data since the last download, and transfers only the data needed to effect those changes.

6. A method according to any preceding claim, wherein change data recorded by the server is allocated a priority level according to its content and, when contact is made with the terminal, the change data is transferred according to the prioritisation allocated thereto.

7. A method according to claim 6, comprising the step of identifying times within the data content, and means for allocating priorities to data items according to the imminence of the times so identified.

8. A data network having a server configured to receive data generated for access by one or more predetermined user terminals, whilst the terminals are out of communication with the source of the generated data, the server comprising master record storage means for maintaining a master record of the generated data, change recording means for generating, from the data received by the server, a record of data that is changed in the master record, for which corresponding changes are required to bring the data currently stored on the terminal into conformity with the master record of the generated data, data storage means for storing the record of changed data, detection means for detecting when the terminal makes contact with the server, and transmission means for transmitting the changed data from the store to the terminal.

9. A network according to claim 8, in which the server comprises duplicate data storage means for maintaining a duplicate record of the data currently stored on the terminal, and wherein the change recording means comprises means for comparing the master record and the duplicate record to generate the record of required changes.

10. A network according to claim 8 or claim 9, wherein the server has the capability to configure the required data in the record into a plurality of formats, and the detection means has means for determining the transport medium by which a terminal is currently connected to the network, and configuration selection means for selecting a format for transmission of the change data appropriate to the transport medium.

11. A network according to claim 10, wherein the detection means has means to identify the type of user device through which connection is being made.

12. A network according to claim 8, 9, 10 or 11, wherein the server identifies the changes made to the data since the last download, and transfers only the data needed to effect those changes.

13. A network according to claim 8, 9, 10 11 or 12, comprising prioritisation means for allocating a priority level to change data according to its content and wherein the transmission means is arranged to transmit the change data according to the prioritisation allocated thereto.

14. A network according to claim 13, having means for identifying times within the data content, and means for allocating priorities to data items according to the imminence of the times so identified.
